# EUROPEAN PATENT APPLICATION

(11) **EP 4 397 878 A1**
(43) Date of publication of application: **10.07.2024**
(21) Application number: 22863696.5
(22) Date of filing: 01.09.2022
(51) Int. Cl.: F16D 59/00, B60W 30/09, B60T 7/12, F16D 55/00, F16D 65/00, B62L 1/00, B62L 3/00

(54) **AUTOMATIC BRAKING SYSTEM FOR A PERSONAL MOBILITY VEHICLE AND PERSONAL MOBILITY VEHICLE INCORPORATING SAID SYSTEM**

(30) Priority: 02.09.2021 ES 202130829
(71) Applicant: FUNDACIÓN I+D AUTOMOCIÓN Y MECATRÓNICA (NAITEC), 31006 Pamplona Navarra (ES)
(72) Inventor: FERNÁNDEZ DÍAZ, José Luis, 31006 Pamplona Navarra (ES); CEMBORAIN MARTINEZ, Tasio, 31006 Pamplona Navarra (ES); BERNARDINI GAGLIANI, Angela, 31006 Pamplona Navarra (ES); IPAS GARAYOA, Oroel, 31006 Pamplona Navarra (ES); GARMENDIA ARCELUS, Nere, 31006 Pamplona Navarra (ES); MARTINEZ DE LUIS, Ignacio, 31006 Pamplona Navarra (ES)
(74) Representative: Fernandez Pou, Felipe
(86) International application number: PCT/ES2022/070550
(87) International publication number: WO 2023/031495

(57) **Abstract**

The present invention relates to an automatic braking system for a personal mobility vehicle and personal mobility vehicle with said system integrated therein, such as an electric scooter with a disc brake mechanism (2) comprising: obstacle detection means (4), for capturing images of the environment it moves through; an electronic control unit (22), which manages the rest of the elements; an electric actuator (6); a modified hydraulic calliper (7) comprising two levers (8, 9) that can be operated by respective cables (10, 11), a manual brake cable (10) that operates the handle (3) and a cable (11) linked to the electric actuator (6).

## Description

### OBJECT OF THE INVENTION

The invention, as expressed in the statement of this specification, relates to an automatic braking system for a personal mobility vehicle and to a personal mobility vehicle with said system integrated therein, providing, to the function for which it is intended, advantages and features, which are described in detail below.

The object of the present invention lies, on the one hand, in an automatic braking system, able to be integrated in a personal mobility vehicle (PMV), preferably an electric scooter but without ruling out others, the purpose of which is to reduce the risk of accident, acting in the event of a possible collision, and which is characterised by consisting of an automatic, autonomous braking system, which is non-intrusive with the manual braking system, basically comprising obstacle detection means, a control unit, and a disc brake mechanism with mixed mechanical-hydraulic actuation, which has an electric actuator and a modified hydraulic brake calliper or clamp, all of this such that it allows four action or braking modes: manual mode, automatic mode, and two mixed modes, one where the user is braking in manual mode and the automatic mode is activated to assist braking, and another where the automatic system is braking and the user brakes manually, a second aspect of the invention being a personal mobility vehicle, preferably an electric scooter, which integrates said automatic braking system together with a disc brake system.

### FIELD OF APPLICATION OF THE INVENTION

The field of application of the present invention is framed within the transport and mobility sector, particularly focussing on the field of the industry dedicated to the manufacture of personal mobility vehicles, and more specifically scooters and similar electric vehicles, encompassing at the same time the field of components and accessories for said vehicles, in particular braking systems.

### BACKGROUND OF THE INVENTION

As is known, urban mobility is changing at a frenetic pace, motivated in large part by the appearance of personal mobility vehicles (PMV), among which are scooters, Segway, bi-wheel platforms, bike-taxi, etc.

These vehicles facilitate and speed up the movement of pedestrians in urban areas, but at the same time generate risk situations that have not existed until now. These situations arise as a consequence of the higher speeds reached by these vehicles, as they incorporate an electric motor, and of not having, in many cases, their dedicated space on the roads.

Personal mobility vehicles (PMV) generate or are involved in risk situations by sharing urban space with the rest of the users and vehicles.

Furthermore, in some cases, these vehicles have a mass greater than that of the people themselves and move at a higher speed than pedestrians, so the damage caused to pedestrians can be considerable, with cases of death and serious injuries having been documented.

Within personal mobility vehicles (PMV), legislation requires a mechanical brake system to stop the vehicle in a controlled and safe manner by the user. Current braking systems, however, do not allow anticipating a collision and leave all responsibility for braking the vehicle in the hands of the driver.

With the proliferation of the use of this type of vehicle in recent years, together with the possibility that these PMV can circulate on roads, sidewalks and bicycle lanes, interacting with pedestrians, bicycles, cars, and the environment itself, there is a need to equip the same with an automatic or smart braking system that allows:
- Reducing the risk of accident, collision of this type of vehicles with other vehicles, pedestrians or objects.
- Optimising the braking capacity of the PMV through the development of smart braking distribution systems between the front and rear axle, thus allowing compliance with the European directive EU-168/2013 regarding combined braking systems.

In accordance with the above, having an automatic braking system (autonomous, automatic, smart, non-intrusive with the manual braking system), which allows eliminating, mitigating or reducing the risk or damage to pedestrians and drivers of PMV in the event of a collision could be seen as a product of interest, useful and intended to increase the safety of this type of vehicle, which is having so much success in our society.

The objective of the present invention is, therefore, the development of an automatic, autonomous braking system that is non-intrusive with the manual braking system that allows achieving said objectives by being built into the standard PMV.

Within the typology of braking systems currently used, the vast majority of PMVs use a disc brake system with friction pad. Depending on the vehicle category, they will have one or two disc brakes (with the exception of one-wheel, two-wheel and Segway that do not have this type of brakes).

Disc brakes are made up of a metal disc (which rotates jointly with the axle of the wheel), and two brake pads that attack the disc on both sides and by friction manage to stop the rotation of the disc, and consequently the rotation of the wheel. The pads are housed in a body that contains the mechanism required to move the pads and generate the required force on the disc, as well as the required attachments to attach the brake to the chassis.

Brakes with either one or two active pads can be found in disc brakes. Brakes with one active pad are less efficient and cheaper than those with two active pads.

Regarding the disc brake actuation system, we can find purely mechanical, purely hydraulic and mixed mechanical and hydraulic actuation.

The vehicle will have one or two braking handles (depending on category), where the user will apply the required force by hand to stop the vehicle.

In purely mechanical systems, the force applied to the handle is multiplied on the lever by its ratio and transmitted through a cable to the brake body, which, through a ramp mechanism with balls, brings the pads closer to the disc (active pad) and performs the braking. Due to the deformation of the disc, the second pad (passive pad), which collaborates in braking, comes into contact. These disc brake systems are low cost and low efficiency.

In purely hydraulic systems, the force exerted on the handle is multiplied by the ratio of the handle, which compresses a piston inside of which flows a hydraulic fluid, which is pressurised and driven to the disc brake body by a hydraulic hose. This pressure through channels brings the pads on both sides of the brake disc closer together and performs the braking. In this system, both pads are active. These brake systems have a higher cost and they are more efficient, but as a drawback, brake fluid and hoses are required, making their maintenance complicated.

In mixed systems, the application of force to the handle, its multiplication and application to the disc brake is done using a cable. From that point, there is a lever that multiplies the force again and transforms that force into hydraulic pressure using a piston. This pressure is transmitted through channels to the pads that come closer to the brake disc on both sides, performing the braking of the disc. These brakes are very efficient and the oil circuit is reduced to a sealed circuit of minimum volume.

Moreover, and as a reference to the current state of the art, it should be noted that, as the closest document, document US2008114519A1 discloses an automatic braking system for an electric bicycle, also applicable to other personal mobility vehicles. Said braking system integrates the service function (manual braking) and an automatic braking system, independently in the same braking mechanism, comprising an automatic activation system, a control unit and the braking mechanism itself which, among other elements, comprises a handle, a service brake cable and a calliper. However, the configuration of said mechanism is notably different from that of the object of the present invention and, more importantly, it does not allow four different braking modes and it is not a non-intrusive system like the one being proposed herein.

For their part, documents CN204527454U and CN209159925U, which disclose an automatic braking system consisting, respectively, of an engine braking system and an electromagnetic braking system, can be considered a sample of the state of the art.

However, none of the aforementioned documents, taken separately or in combination, appear to describe the automatic braking system that is the object of the present invention, as claimed herein.

### DESCRIPTION OF THE INVENTION

The automatic braking system for a personal mobility vehicle and the personal mobility vehicle with said system integrated therein that the invention proposes are configured as the ideal solution for the aforementioned objective, with the characterising details that make it possible and that distinguish them conveniently included in the final claims that accompany this description.

Specifically, what the invention proposes, as noted above, is a system that is responsible for improving the active safety of PMVs, improving the safety of drivers and pedestrians by performing the following functions:
- Avoiding collision between user and pedestrian / vehicles / infrastructure, braking the vehicle and stopping completely automatically and autonomously, without user intervention.
- Minimising damage to users / pedestrians / vehicles / infrastructure, if the collision is imminent, by reducing the speed of the PMV automatically and autonomously to minimise damage to the driver or pedestrian, without user intervention.
- Carrying out an evasive manoeuvre, in order to reduce the speed of the PMV and continue circulating in the event of a sudden obstacle.
- Acting as an assistance system to the manual braking performed by the user, if the system detects that there is a risk of collision and the user does not apply sufficient braking force.

To this end, the main elements comprised in the automatic braking system of the invention are:
- Means (hardware and software) for detecting obstacles.
- A control unit
- An electric actuator.
- And a hydraulic calliper modified such that it has two levers that can be operated by cable, one reserved for the manual brake of the scooter and another for the electric actuator which, in turn, has position and/or force feedback, so that the braking torque can be controlled in a closed and/or open loop depending on the speed, distance from the object and the four modes of action or braking provided.

With this, the basic operating principles of the system are:
- Capture of images in the front area of the vehicle in real time.
- Stopping in real time if an obstacle such as a vehicle, pedestrian or street furniture is within the PMV trajectory, and if this obstacle is in motion or in a static state.
- Analysing in real time the variables of: PMV speed, distance from the PMV to the object (optionally the algorithm could include the size and weight of the user, their position on the scooter or personalised customisation of how emergency braking is to be performed).
- With the information from the preceding points, analysis of the danger curve and decision making if there is a risk of collision.
- If there is a risk of collision, activation of the acoustic signal and control of the braking system.

Moreover, the proposed system comprises a mechanism that allows adding the smart braking functionality to a PMV mechanical brake in a non-intrusive manner, allowing its operation in four actuation or braking modes:
- Manual mode: where the braking action and control is carried out by the driver by applying force to the handle. It is the usual method.
- Automatic mode: where the braking action is carried out in automatic mode managed by the control unit based on a series of criteria and variables explained in preceding points.
- A first mixed mode: where the user is braking in manual mode and the automatic mode is activated to assist braking in the event that risk of collision is detected.
- And a second mixed mode: where the automatic system is braking and the driver brakes manually.

With all this, the advantages provided by the system of the invention are multiple, especially the following:
- It allows a new function to be introduced into the same PMV disc brake system without structural modifications to the vehicle, since only a number of parts needs to be replaced.
- It allows increasing the safety of the vehicle and the user, covering possible mistakes, or lack of control in the braking action.
- Providing automatic activation of the brake, which will be automatically activated by the scooter's control unit and not manually by the user. Its action will be the result of the obstacle detection control strategy and of the service braking assistance in the event that the user does not apply the force required to stop the vehicle.
- Works independently of the service brake. The automatic braking system is smart to operate independently of the PMV manually actuated service brake. That is, acting on one of them will not modify the state of the other, so it is a non-intrusive system, avoiding disruptive or unwanted interference to the user when braking. The system does not interfere with the manual operation of the brake, but rather assists in braking depending on the user's interaction with the brake system.
- It offers uninterrupted availability of the service brake, guaranteeing the possibility of manual braking at any time and in any situation, such as, for example, when there is no battery, or on steep slopes.
- Improves the braking capacity of the brakes currently implemented in urban mobility vehicles. Most of the current PMV brakes only have one active pad: the inner pad (towards the wheel) that acts once the disc is deformed, not being the most effective system, but an inexpensive one.

With the system object of the invention, both brake pads are activated.
- Improves braking efficiency, integrating the service brake and the smart brake in the same calliper and in such a way that either of the two operates both brake pads.

Finally, it should be noted that, taking advantage of the fact that the functionalities of the hardware and software elements that the automatic braking system described comprises are potentially configurable through specifically developed apps, said system, as well as the personal mobility vehicle in which it is integrated and which, as has been pointed out, makes up a second aspect of the invention, in other optional embodiments, they are equipped with additional solutions and components that increase their performance.

Specifically, the automatic braking system optionally comprises one or more of the following additional systems:
- An acoustic and light warning subsystem (rear brake light) during automatic braking.
- An image recording subsystem suitable to support forensic analysis of accidents.
- A subsystem for locking and unlocking the PMV from an app.
- An anti-theft and acoustic warning subsystem in case of theft or improper manipulation.

More specifically, each of said systems contemplates the following:
- Regarding the acoustic warning and rear light subsystem, it is a system that alerts both the PMV user and the environment (pedestrians or other vehicles) of the presence of a PMV that is in a potential collision situation in which the automatic emergency braking system has been activated.

To do this, the PMV has an acoustic warning system of intermittent beeps (generated by a speaker, buzzer or other device), which is activated by the brake system control unit at the time it activates automatic emergency braking. This acoustic system will be deactivated when the vehicle stops. This system is useful to notify both the environment and the user.

In addition, the PMV has a rear light lighting system, rear brake light (red), conventionally available in the PMV, located on the rear fender, and which is manually activated by the user when he wants to stop the vehicle, above which an additional rear light system is incorporated with the four braking operating modes in the case of smart braking. This system is useful so that other vehicles can detect or anticipate that the PMV is in a risky situation.
- Subsystem to support forensic analysis of accidents. Since the obstacle detection system takes images of the front area of the PMV in real time and continuously, taking advantage of the fact that the system must analyse the depth of the image in each image in search for obstacles, associating the speed of the vehicle with the image, as well as date and time and the decision criteria taken by the system to activate the braking system, said images could be used as evidence before the relevant authorities to analyse the causes of an accident between a PMV and a pedestrian, obstacle or other vehicles and clarify responsibilities.

To do this, the system saves in a temporary memory of the control unit the image interval from the moment the system activates the emergency braking until the vehicle stops. This image packet is stored compressed, encrypted in the local memory of the PMV.

The user will have an app on their smartphone that will allow them to connect the user's mobile device to the PMV via Bluetooth in order to extract these compressed files. This application will allow the different video fragments to be displayed, as well as the renaming of files and sharing them with other applications (WhatsApp, Gmail, etc.).
- Subsystem for locking/unlocking the PMV from the app. Due to the existence of an electric actuator within the smart braking system, which is responsible for actuating a second cable and a second lever of the PMV braking system during emergency braking, as well as the irreversibility ability it presents, consisting of the fact that, once the power supply is deactivated, retraction of the stem is not possible by manual means, the longitudinal position of the actuating stem does not change until it is re-energised by the control system and brought to its starting position.

Thus, through a specific app, conveniently installed on the user's smartphone, which is connected via Bluetooth with the PMV braking system control unit, it allows acting on the emergency brake lever in order to actuate the calliper and lock the rear wheel.

Optionally, an acoustic signal on the PMV allows reporting that it is locked. This same app allows the PMV to be unlocked once the vehicle is turned on through its on/off switch.
- Anti-theft subsystem and acoustic and light warning subsystem in case of theft or improper manipulation. To this end, the inclusion of motion detection means is contemplated (based on accelerometers, magnetic sensors, and/or electromechanical systems) that complements the locking system described in the previous point, with a function that activates an acoustic and/or light signal that could also activate the front light of the vehicle, to deter potential criminals or detect unwanted or ill-intentioned movements.

This signal will be deactivated when the PMV returns to a rest position for a certain period of time.

As it is an urban mobility vehicle, it may be the case that the user is required to carry same (train, subway, bus, automobile, etc.) or even move it manually, so the smartphone app optionally provides three modes of use:
- Anti-theft or improper movement mode: consists of locking the rear wheel, and activating the motion-sensitive alarm system, when detecting theft of the PMV or unwanted movements.
- Transport mode: motion detection system deactivated and rear wheel lock deactivated. PMV not powered (power button in OFF mode), allowing the PMV to be dragged by the user.
- Lock mode: rear wheel is locked, vehicle not powered, motion detection system deactivated. It makes it possible to leave the scooter parked for short periods of time when the user is nearby.

### DESCRIPTION OF THE DRAWINGS

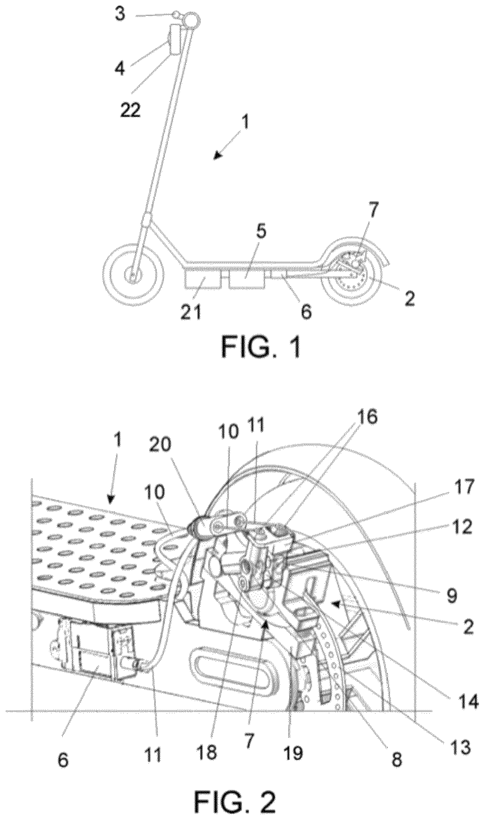

To complete the description provided herein, and for the purpose of helping to make the features of the invention more readily understandable, this description is accompanied by drawings constituting an integral part of the same, which by way of illustration and not limitation represents the following:
Figure number 1 shows a schematic side elevation view of an electric scooter with a disc brake to which an example of the automatic braking system for a personal mobility vehicle object of the invention has been incorporated, showing the main parts and elements of the mechanism it comprises;
Figure number 2 shows a schematic side perspective view of a rear portion of the scooter shown in Figure 1, showing the main parts and elements of the system that are incorporated into the brake mechanism;
Figure number 3 shows another rear perspective view of the braking system mechanism, according to the invention, shown in Figure 2; and
Figure number 4 shows another top perspective view of the brake mechanism shown in the preceding figures.

### PREFERRED EMBODIMENT OF THE INVENTION

In view of the aforementioned figures, and in accordance with the numbering adopted, a non-limiting exemplary embodiment of the automatic braking system for a personal mobility vehicle of the invention and of the personal mobility vehicle with said system integrated therein can be observed therein, comprising that which is described in detail below.

Thus, as seen in said figures, the automatic braking system of the invention, applicable to be built into a personal mobility vehicle or PMV (1), such as, for example, an electric scooter, together with a disc brake mechanism (2), that the user operates by applying force to a handle (3), essentially comprises:
- obstacle detection means (4), for example a camera, installed on the chassis of the PMV (1), for capturing images of the environment it moves through, especially the front area,
- a control unit (22), for example an ECU (Engine Control Unit), preferably of the programmable Raspberry Pi type, which manages the operation of the rest of the elements of the system,
- an electric actuator (6), with its respective control electronic unit (5), associated with the disc brake mechanism (2), and
- a hydraulic calliper (7) modified such that it has two levers (8, 9) that can be operated by respective cables (10, 11), a first manual brake cable (10) that is operated with the handle (3), and a second cable (11) linked to the electric actuator (6) which, preferably, in turn, has position and/or force feedback, so the braking torque can be controlled in a closed and/or open loop depending on the speed and distance from the eventual obstacle detected by the detection means (4),
characterised in that the system described is connected in a non-intrusive manner, so that it discriminates between four action or braking modes: a manual braking mode only by the user with the handle (3); an automatic braking mode managed autonomously by the control unit (22); a first mixed braking mode by the user with the handle (3) and by the control unit (22) as assistance; and a second mixed braking mode autonomously with the control unit (22) and also with the handle (3) by the user.

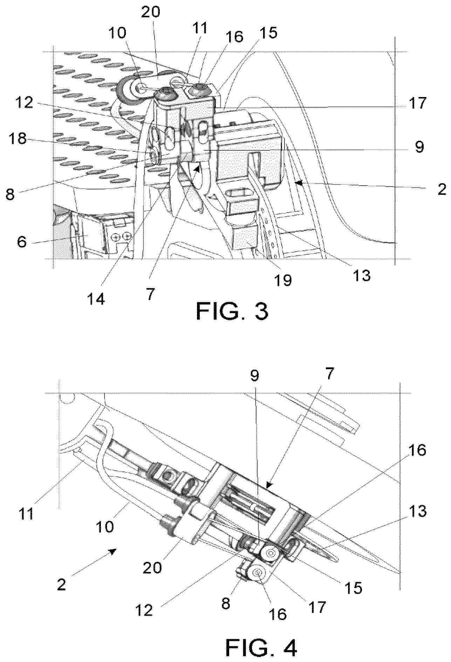

Looking at Figures 2 to 4, it can be seen how, in the exemplary embodiment shown, the automatic braking system of the invention is integrated into a hydraulic mechanical mixed disc brake mechanism (2).

In the known form of this type of brake, its operation is simple. The user applies force to the handle (3), the handle (3) multiplies the applied force by its ratio, this force is transmitted by a cable (10) to the hydraulic disc brake (2) and actuates a lever (8) of the calliper (7) with which it is linked at its other end; said lever (8) rotates on its support and pushes a piston (12), which generates pressure in the circuit and brings the pads closer to the disc (13). When the user relaxes the force on the handle (3), it returns, likewise the brake lever (8) returns, relaxing the pressure exerted by the piston (12) and consequently the pressure exerted by the pads on the disc (13).

Now, based on said already known configuration, the brake mechanism (2) of the automatic braking system of the invention comprises, integrated into a hydraulic calliper (7) modified for this purpose, a second lever, hereinafter smart lever (9), which coexists with the described service lever (8) being located in the position closest to the disc, since this second lever (9) acts as a smart brake and is always responsible for generating the pressure inside the brake (2) through the piston (12) to carry out the braking action of the PMV (1). These two levers (8, 9) have the same rotation point using a spacer bushing (14) provided between them within the modified calliper (7).

Furthermore, the smart lever (9) is actuated by means of a second cable (11) by the electric actuator (6), controlled by the control unit (22) through the respective control electronics (5) of the actuator itself. For its part, the service lever (8) is actuated by the user through the handle (3) with which it is associated through a first cable (10).

As mentioned, the system comprises an electric actuator (6), which acts on the smart brake lever (9) through a second cable (11) that is retained by a retaining plate (15) and an attachment screw (16). The movement of this lever (9) will move the piston (12) of the disc brake (2), allowing hydraulic pressure to be generated in the calliper (7) and move the brake pads towards the disc (13), braking the PMV (1).

Preferably, the mechanism further comprises a push plate (17) which is integrally attached to the service lever (8) by means of another attachment screw (16). This push plate (17) allows fixing the end of the first cable (10) of the manual service brake and acting on the smart brake lever (9) to move the piston (12) and generate pressure in the calliper (7) of the disc brake (2), which will occur when manual braking is activated by the user by means of the handle (3).

Likewise, the mechanism of the system of the invention comprises a spacer bushing (14), which allows the rotation of both levers (8, 9) independently, which remain attached to the calliper (7) of the disc brake (2) by means of a side screw (18).

The calliper (7) is fastened to the chassis of the PMV (1) embracing the disc (13) by means of a support (19) that keeps it in a stable position.

Furthermore, the mechanism comprises an adapter (20) that attaches the sheaths of the two cables (10, 11) and allows adjusting the tension of the wire that makes up both of them.

Finally, it should be noted that, preferably, the electrical components of the described automatic braking system are powered by the PMV (1) battery itself through 2 DC-DC converters (21) that power same at their corresponding voltages.

With this, as previously stated, the system allows four action or braking modes that are explained in greater detail below:
- Manual mode: braking action and control is carried out by the driver by applying force to the handle (3). It is the usual method.

Braking: The user applies force to the handle (3) and due to the lever ratio in the handle, a movement of the first cable (10) integrally attached to the service lever (8) is produced. This lever (8) rotates about the bushing (14) pushing the smart lever (9) through the push plate (17). In this way, it is possible to move the piston (12) and generate pressure in the hydraulic calliper circuit (7) of the braking system (2). The movement of the smart lever (9) is possible because the second cable (11) only transmits tensile stress and in this case, since the actuator (6) is not operated, the cable (11) is compressed allowing the movement of the two levers (8 and 9).

Return: The system returns to its original position as the user relaxes the force on the handle (3). If the force ceases the system returns to its initial position.
- Automatic mode, where the brake actuation is carried out autonomously managed by the control unit (22) of the system based on a series of criteria and variables.

Braking: The braking of the PMV (1) occurs without user intervention. The control unit (22), depending on what is programmed and what the obstacle detection means (4) detect, sends an electrical signal to activate the electric actuator (6), which, through the second cable (11), operates the smart lever (9) of the calliper (7) of the disc brake (2). The lever (9) rotates independently of the service lever (8) through the bushing (14) without affecting the handle (3) of the PMV (1) at any time.

The duration of braking and return is determined by the control unit (22), measuring the following:
- the distance to the object,
- the speed of the vehicle at all times.

And any time the following is met:
- that there is an object in front of the trajectory of the vehicle with a risk of collision detected by the obstacle detection means (4), and
- the speed of the PMV (1) is greater than 5km/h.

The electric actuator (6) will be in stress mode generating pressure on the disc brake (2). When any of these conditions are not met, the actuator (6) reverses the direction of actuation, relaxing the stress in the cable (11) and returning the lever (9) to its rest position.
- First mixed mode: where the user is braking in manual mode and the automatic system is activated to assist braking in the event that risk of collision is detected.

Braking: the user is braking in manual mode as explained above and, at some point during braking, the control unit (22) detects that:
- the vehicle may collide with an object
- and that its speed is still higher than 5 km/h

At this point the service lever (8) has dragged the smart lever (9) along with it to a certain point. The control unit (22), through the control electronics (5), activates the actuator (6) and begins stressing the second cable (11). When the cable (11) reaches sufficient stress to lower the smart lever (9), two situations can occur:
- that the user maintains the position of the handle (3), whereby the actuator (6) continues stressing the cable (11) and moving the smart brake lever (9) until any of the conditions described above are no longer met,
- that the user applies more movement to the handle (3) by turning the service lever (8) so that the smart lever (9) is also rotated. In this case, as long as the conditions indicated above are met, the control unit (22), through the control electronics (5), will command the actuator (6) to stress the cable (11) and collaborate in the braking, which will take place from the moment the stress in the cable (11) is sufficient to move the smart lever (9).

Return: When any of these conditions are not met, the actuator (6) reverses the direction of actuation, relaxing the stress in the cable (11) and returning the smart lever (9) to its rest position.
- Second mixed mode, where the automatic system is braking and the driver brakes manually.

Braking: the PMV (1) is braking using the automatic braking system without user intervention as explained above and, at some point during braking, the user activates the brake handle (3), two situations can occur:
- that the service brake lever (8) does not match the position of the smart brake lever (9). In this case, the braking will be commanded by the actuator (6) and the lever (8) does not provide any type of braking assistance.
- that the service brake lever (8) exceeds the current position of the smart brake lever (9), in which case the braking is commanded by the user. This braking control by the user will last until the stress in the cable (11) is sufficient for the smart lever (9) to exceed the position of the service lever (8) and, as long as the conditions indicated above are met (which rule automatic braking), the actuator (6) will continue to stress the cable (11).

Return: When any of the conditions indicated above are not met, the actuator (6) reverses the direction of action, relaxing the stress in the cable (11) and returning the lever (9) to its rest position, provided that the user has stopped applying force to the handle (3). Otherwise, the lever (9) returns to the position allowed by the push plate (17) that is integrally attached to the lever (8).

In addition to all of the above, and although it has not been represented in the figures, the automatic braking system described, in other optional embodiments, may also comprise one or more of the following additional subsystems:
- An acoustic and light warning subsystem (rear brake light) during automatic braking.
- An image recording subsystem suitable to support forensic analysis of accidents.
- A subsystem for locking and unlocking the PMV from an app.
- An anti-theft and acoustic warning subsystem in case of theft or improper manipulation.

Preferably, the acoustic and light warning subsystem comprises a speaker, buzzer or other sound device which, together with the vehicle lights, at least the rear brake light (red), is activated by the control unit (22) of the brake system at the time it activates automatic emergency braking.

Preferably, the subsystem to support the forensic analysis of accidents comprises a temporary memory integrated in the control unit (22) which stores, in a compressed and encrypted manner, the image interval collected from a few seconds before the system activates emergency braking until the vehicle stops, and which the user can access through a specific app.

Preferably, the locking/unlocking subsystem includes a specific app that, via Bluetooth, is connected with the control unit (22) to act on the emergency lever (9) of the calliper (7) and lock the rear wheel since, once the power supply is deactivated, retraction of the stem of the electric actuator (6) is not possible by manual means.

Optionally, an acoustic signal on the PMV allows reporting that it is locked. This same app allows the PMV to be unlocked once the vehicle is turned on through its on/off switch.

And, preferably, the anti-theft and acoustic and light warning subsystems comprise the inclusion of motion detection means, such as accelerometers, magnetic sensors, and/or electromechanical systems, which are complemented by the locking system of the previous point, and that activate an acoustic and/or light signal when detecting unwanted movements.

Having sufficiently described the nature of the present invention, as well as the manner in which it may be implemented, it is not considered necessary to elaborate on the explanation thereof in order for a person skilled in the art to understand the scope of the invention and the advantages derived from the same.

## Claims

1. An automatic braking system for a personal mobility vehicle, applicable to be built into a personal mobility vehicle or PMV (1), together with a disc brake mechanism (2) that the user operates by applying force to a handle (3), **characterised in that** it comprises:
- obstacle detection means (4), installed on the chassis of the PMV (1), for capturing images of the environment it moves through, especially the front area,
- a control unit (22), which manages the operation of the rest of the elements of the system,
- an electric actuator (6), with its respective control electronics (5), associated with the disc brake mechanism (2), and
- a modified hydraulic calliper (7), comprising two levers (8, 9) that can be operated by respective cables (10, 11), a first cable (10) of the manual brake that is operated with the handle (3) and a second cable (11) linked to the electric actuator (6),
further **characterised in that** all of this is connected in a non-intrusive manner, such that it distinguishes between four braking modes: a manual braking mode only by the user with the handle (3); an automatic braking mode managed autonomously by the control unit (22); a first mixed braking mode by the user with the handle (3) and by the control unit (22) as assistance; and a second mixed braking mode autonomously with the control unit (22) and also with the handle (3) by the user.

2. The automatic braking system for a personal mobility vehicle, according to claim 1, **characterised in that** the obstacle detection means (4) comprise a camera.

3. The automatic braking system for a personal mobility vehicle, according to claim 1 or 2, **characterised in that** the control unit (22) is a programmable ECU unit, which manages the operation of the rest of the elements of the system.

4. The automatic braking system for a personal mobility vehicle, according to any of claims 1 to 3, **characterised in that** the electric actuator (6) has position and/or force feedback.

5. The automatic braking system for a personal mobility vehicle, according to any of the preceding claims, **characterised in that** the modified hydraulic calliper (7) comprises a service lever (8), which is actuated through the handle (3) with which it is associated through a first cable (10), and a smart lever (9) which is actuated, through a second cable (11), by the electric actuator (6) which, in turn, is controlled by the control unit (22) through the control electronics (5) of the actuator itself, this smart lever (9) being located in the position closest to the disc (13) and being responsible for generating pressure within the brake (2) through the piston (12) to carry out the braking action of the PMV (1).

6. The automatic braking system for a personal mobility vehicle, according to claim 5, **characterised in that** the second cable (11) that operates the smart brake lever (9) is retained by a retaining plate (15) and an attachment screw (16).

7. The automatic braking system for a personal mobility vehicle, according to claim 5 and 6, **characterised in that** it further comprises a push plate (17) integrally attached to the service lever (8) by means of another attachment screw (16) to attach the end of the first cable (10) and act on the smart brake lever (9) to move the piston (12) and generate pressure in the calliper (7) of the disc brake (2) when manual braking is activated by the user using the handle (3).

8. The automatic braking system for a personal mobility vehicle, according to any of claims 5 to 7, **characterised in that** it comprises a spacer bushing (14) that allows the rotation of both levers (8,9) independently, which is attached to the calliper (7) by means of a side screw (18).

9. The automatic braking system for a personal mobility vehicle, according to any of claims 5 to 7, **characterised in that** it comprises an adapter (20) that attaches the sheaths of the two cables (10, 11) and allows adjusting the tension of the wire that makes up both of them.

10. The automatic braking system for a personal mobility vehicle, according to any of the preceding claims, **characterised in that** it comprises an acoustic and light warning subsystem, at least for the rear brake light, during automatic braking.

11. The automatic braking system for a personal mobility vehicle, according to any of the preceding claims, **characterised in that** it comprises an image recording subsystem suitable for supporting forensic analysis of accidents.

12. The automatic braking system for a personal mobility vehicle, according to any of the preceding claims, **characterised in that** it comprises a subsystem for locking and unlocking the PMV from an app.

13. The automatic braking system for a personal mobility vehicle, according to any of the preceding claims, **characterised in that** it comprises an anti-theft and acoustic warning subsystem in case of theft or improper manipulation.

14. A personal mobility vehicle **characterised by** comprising an automatic braking system as described in any of claims 1 to 13 integrated therein.

15. The personal mobility vehicle, according to claim 14, **characterised by** consisting of an electric scooter.
